# EUROPEAN PATENT APPLICATION

(11) **EP 4 712 182 A1**
(43) Date of publication of application: **18.03.2026**
(21) Application number: 25192486.6
(22) Date of filing: 29.07.2025
(51) Int. Cl.: H01M 10/04, H01M 50/209, H01M 50/533, H01M 50/553

(54) **CURRENT COLLECTOR AND BATTERY**

(30) Priority: 17.09.2024 JP 2024159990
(71) Applicant: TOYOTA JIDOSHA KABUSHIKI KAISHA, Toyota-shi, Aichi-ken 471-8571 (JP)
(72) Inventor: MIMURA, Tetsuya, Toyota-shi, 471-8571 (JP); SUGIHARA, Atsushi, Toyota-shi, 471-8571 (JP); MORIYAMA, Satoshi, Toyota-shi, 471-8571 (JP); HAGA, Masayoshi, Toyota-shi, 471-8571 (JP); FURUKAWA, Masaki, Toyota-shi, 471-8571 (JP); YAMASHITA, Keita, Toyota-shi, 471-8571 (JP); SAKAMOTO, Ryuto, Toyota-shi, 471-8571 (JP); NAGAI, Hideyuki, Toyota-shi, 471-8571 (JP)
(74) Representative: Kuhnen & Wacker Patent- und Rechtsanwaltsbüro PartG mbB

(57) **Abstract**

A current collector (100A) includes a support portion (110), a first conductive layer (120), and a second conductive layer (130). The support portion (110) includes an electrically insulating resin composition. The support portion (110) includes a support layer (111) and an extension portion (112). The first conductive layer (120) is in contact with the support layer (111) on a first side in a thickness direction (DT) of the support layer (111). The second conductive layer (130) is in contact with the support layer (111) on a second side in the thickness direction (DT). The extension portion (112) extends from the support layer (111) in an orthogonal direction (DO) orthogonal to the thickness direction (DT).

## Description

### CROSS REFERENCE TO RELATED APPLICATIONS

This nonprovisional application is based on Japanese Patent Application No. 2024-159990 filed on September 17, 2024 with the Japan Patent Office, the entire contents of which are hereby incorporated by reference.

### BACKGROUND

### Field

The present disclosure relates to a current collector and a battery.

### Description of the Background Art

Japanese National Patent Publication No. 2024-510696 discloses an electrode plate used for a secondary battery. The electrode plate includes a current collector, an active material layer, and an electrical connection member. The current collector includes a support layer and a conductive layer disposed on a surface of the support layer.

### SUMMARY

Further improvements in energy density of batteries are needed. From the viewpoint of improving energy density of batteries, there is room for further improvements in the structure of current collectors used for batteries.

The present disclosure has been made in view of the above problem. An object of the present disclosure is to provide a current collector that can improve energy density of a battery when the current collector is used as a part of the battery.

A current collector according to an aspect of the present disclosure includes a support portion, a first conductive layer, and a second conductive layer. The support portion includes an electrically insulating resin composition. The support portion includes a support layer and an extension portion. The first conductive layer is in contact with the support layer on a first side in a thickness direction of the support layer. The second conductive layer is in contact with the support layer on a second side in the thickness direction. The extension portion extends from the support layer in an orthogonal direction orthogonal to the thickness direction.

**In** the current collector according to an aspect of the present disclosure, preferably, the extension portion is bent to at least any one side in the thickness direction.

**In** the current collector according to an aspect of the present disclosure, preferably, the extension portion includes a first extension portion and a second extension portion. The first extension portion and the second extension portion are aligned with each other in the thickness direction. The first extension portion is bent to a side opposite to the second extension portion. The second extension portion is bent to a side opposite to the first extension portion.

In the current collector according to an aspect of the present disclosure, preferably, the extension portion has a pore.

A battery according to an aspect of the present disclosure includes an electrode body and a case. The case is electrically conductive. The case houses the electrode body. The electrode body includes a first electrode, a second electrode, and a separator. The first electrode includes a current collector and an active material layer. The current collector includes a support portion, a first conductive layer, and a second conductive layer. The support portion includes an electrically insulating resin composition. The support portion includes a support layer and an extension portion. The first conductive layer is in contact with the support layer on a first side in the thickness direction of the support layer. The second conductive layer is in contact with the support layer on a second side in the thickness direction. The active material layer is stacked on the first conductive layer. The separator is stacked on the active material layer. The second electrode is stacked over the active material layer with the separator in between. The extension portion extends from the support layer in an orthogonal direction orthogonal to the thickness direction.

In the battery according to an aspect of the present disclosure, preferably, the extension portion extends beyond the second electrode in an extension direction in which the extension portion extends from the support layer.

In the battery according to an aspect of the present disclosure, more preferably, the extension portion extends beyond the separator in the extension direction.

In the battery according to an aspect of the present disclosure, preferably, the extension portion is bent to at least any one side in the thickness direction.

In the battery according to an aspect of the present disclosure, more preferably, the extension portion is aligned with the separator in an extension direction in which the extension portion extends from the support layer.

In the battery according to an aspect of the present disclosure, still more preferably, the extension portion is aligned with the second electrode in the extension direction.

In the battery according to an aspect of the present disclosure, preferably, the extension portion includes a first extension portion and a second extension portion. The first extension portion and the second extension portion are aligned with each other in the thickness direction. The first extension portion is bent to a side opposite to the second extension portion. The second extension portion is bent to a side opposite to the first extension portion.

In the battery according to an aspect of the present disclosure, preferably, the extension portion has a pore.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view of a battery according to Embodiment 1.
Fig. 2 is an exploded perspective view of the battery according to Embodiment 1.
Fig. 3 is a sectional view of the battery of Fig. 1 as viewed in the direction of arrow III-III.
Fig. 4 is a sectional view of an electrode body of Fig. 3 as viewed in the direction of arrow IV-IV.
Fig. 5 is a sectional view of the electrode body of Fig. 3 as viewed in the direction of arrow V-V.
Fig. 6 is a schematic partial sectional view of the electrode body of Fig. 3 as viewed in the direction of arrow VI-VI.
Fig. 7 is a developed view of a first electrode.
Fig. 8 is an enlarged partial sectional view of a region VIII of a first electrode of Fig. 5.
Fig. 9 is an enlarged partial sectional view of a region IX of the electrode body of Fig. 5.
Fig. 10 is a view of the electrode body and a bottom insulating portion as viewed from an extension direction side.
Fig. 11 is a partial sectional view of a battery according to a modification.
Fig. 12 is a developed view of a first electrode in the modification.
Fig. 13 is a partial sectional view of an electrode body of a battery according to Embodiment 2.
Fig. 14 is a partial sectional view of an electrode body of a battery according to Embodiment 3.

### DESCRIPTION OF THE PREFERRED EMBODIMENTS

A current collector and a battery according to each embodiment of the present disclosure will be described with reference to the drawings. In the drawings referred to below, the same or corresponding components have the same reference characters allotted.

### (Embodiment 1)

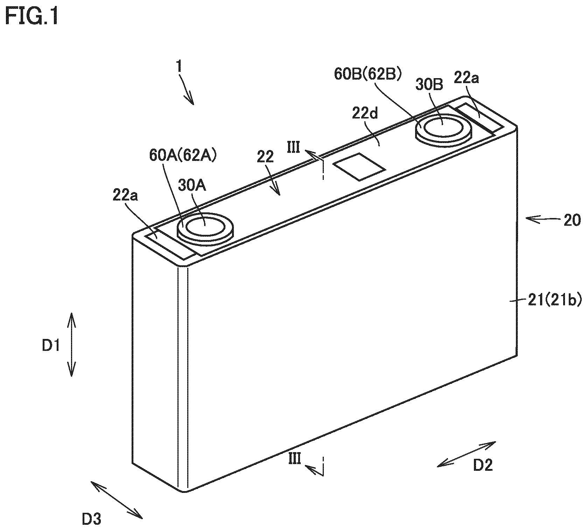

Fig. 1 is a perspective view of a battery according to Embodiment 1. As shown in Fig. 1, a battery 1 according to Embodiment 1 is a so-called rectangular battery. Battery 1 may be a secondary battery capable of charging and discharging, such as a lithium-ion battery or a nickel-metal hydride battery. Battery 1 may be used as, for example, a cell included in a power storage module mounted in an electrically powered vehicle.

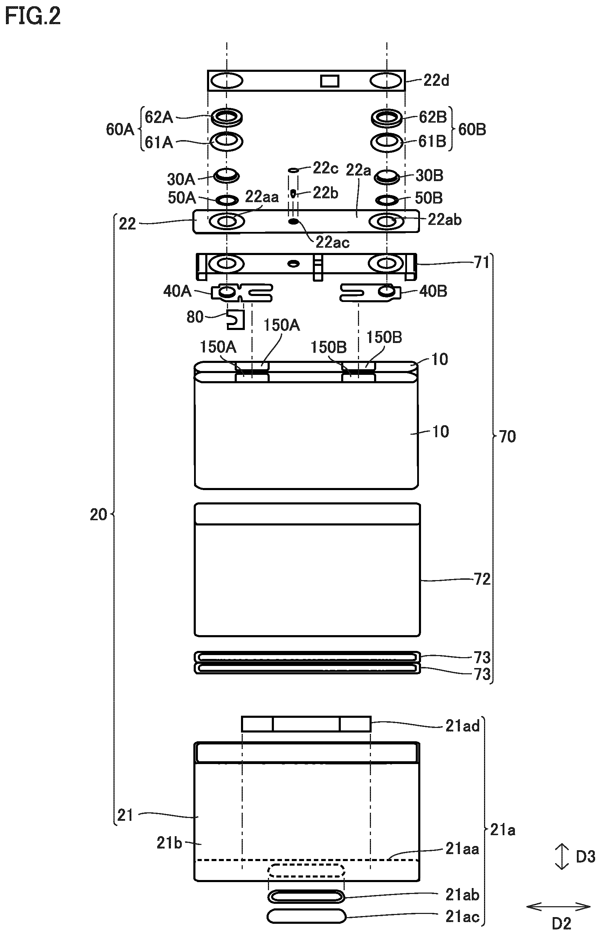

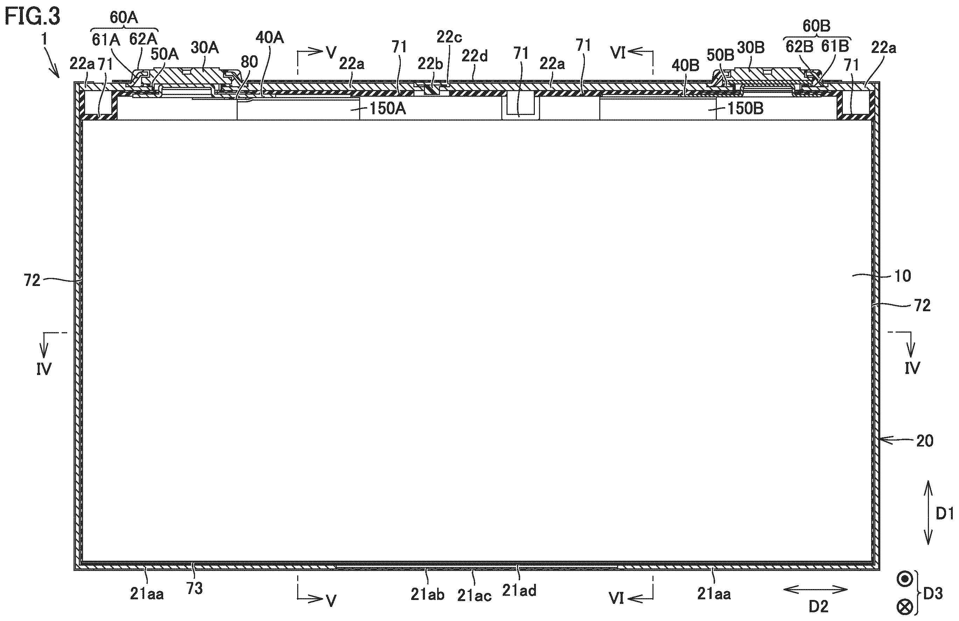

Fig. 2 is an exploded perspective view of the battery according to Embodiment 1. Fig. 3 is a sectional view of the battery of Fig. 1 as viewed in the direction of arrow III-III. As shown in Figs. 1 to 3, battery 1 according to Embodiment 1 of the present disclosure includes an electrode body 10, a case 20, a first external terminal 30A, a second external terminal 30B, a first coupling member 40A, a second coupling member 40B, a first seal ring 50A, a second seal ring 50B, a first terminal support portion 60A, a second terminal support portion 60B, an insulating member 70, and a fuse protection portion 80. First, the components of battery 1 other than electrode body 10 will be described.

Case 20 is electrically conductive. An electrically conductive portion of case 20 is made of, for example, a metal such as aluminum. Case 20 houses electrode body 10. Case 20 also houses an electrolyte (not shown).

Case 20 includes a case body 21 and a lid 22. Case body 21 includes a bottom wall 21a and a peripheral wall 21b that rises from bottom wall 21a.

Bottom wall 21a includes a bottom body 21aa, a pressure release valve 21ab, an outer protective film 21ac, and an inner protective film 21ad. Peripheral wall 21b rises from bottom body 21aa. Pressure release valve 21ab is provided in bottom body 21aa. Outer protective film 21ac covers pressure release valve 21ab from the outside. Inner protective film 21ad covers pressure release valve 21ab from the inside. Bottom body 21aa and pressure release valve 21ab are made of a metal such as aluminum.

An opening is formed at the top of peripheral wall 21b. Peripheral wall 21b has an approximately rectangular external shape as viewed from the direction of the opening. The opening and bottom wall 21a are aligned in a first direction D1. First direction D1 may be the height direction or the upward-downward direction of battery 1. Peripheral wall 21b is made of a metal such as aluminum.

Lid 22 includes a lid body 22a, a sealing plug 22b, a plug cover 22c, and an insulating cover 22d.

Lid body 22a is joined to peripheral wall 21b by welding or the like so as to close the opening of peripheral wall 21b. Lid body 22a has a first coupling hole 22aa, a second coupling hole 22ab, and an injection hole 22ac. Injection hole 22ac is a through hole for injecting the electrolyte into case body 21 during manufacture of battery 1.

Sealing plug 22b seals injection hole 22ac. Plug cover 22c covers injection hole 22ac and sealing plug 22b. Insulating cover 22d covers injection hole 22ac, sealing plug 22b, and plug cover 22c.

First external terminal 30A and second external terminal 30B are provided so as to be exposed to the outside in battery 1. First coupling member 40A and second coupling member 40B are electrically conductive. First coupling member 40A and second coupling member 40B are at least partially disposed inside case 20.

First external terminal 30A or first coupling member 40A is inserted into first coupling hole 22aa. First external terminal 30A and first coupling member 40A are joined to each other. First coupling member 40A is joined to electrode body 10. As a result, first external terminal 30A is electrically connected to electrode body 10.

Second external terminal 30B or second coupling member 40B is inserted into second coupling hole 22ab. Second external terminal 30B and second coupling member 40B are joined to each other. Second coupling member 40B is joined to electrode body 10. As a result, second external terminal 30B is electrically connected to electrode body 10.

In the present embodiment, first external terminal 30A is a positive terminal, and second external terminal 30B is a negative terminal. First external terminal 30A and second external terminal 30B are aligned in a second direction D2. Second direction D2 is a direction orthogonal to first direction D1.

First seal ring 50A is provided along first coupling hole 22aa. First seal ring 50A is provided in the gap between lid body 22a and first external terminal 30A, and seals this gap. Second seal ring 50B is provided along second coupling hole 22ab. Second seal ring 50B is provided in the gap between lid body 22a and second external terminal 30B, and seals this gap. First seal ring 50A and second seal ring 50B are electrically insulating.

First terminal support portion 60A is locked to lid body 22a. First terminal support portion 60A supports first external terminal 30A from the outer peripheral side of first external terminal 30A. First terminal support portion 60A includes a first locking ring 61A and a first covering ring 62A. First locking ring 61A extends annularly so as to surround first coupling hole 22aa and is directly locked to lid body 22a. First covering ring 62A covers first locking ring 61A. First locking ring 61A supports first external terminal 30A via first covering ring 62A. First covering ring 62A is formed of a resin member having electrical insulation properties or relatively weak electrical conductivity.

Second terminal support portion 60B is locked to lid body 22a. Second terminal support portion 60B supports second external terminal 30B from the outer peripheral side of second external terminal 30B. Second terminal support portion 60B includes a second locking ring 61B and a second covering ring 62B. Second locking ring 61B extends annularly so as to surround second coupling hole 22ab and is directly locked to lid body 22a. Second covering ring 62B covers second locking ring 61B. Second locking ring 61B supports second external terminal 30B via second covering ring 62B. Second covering ring 62B is formed of an electrically insulating resin member.

Insulating member 70 is electrically insulating. Insulating member 70 is disposed between electrode body 10 and case 20. Insulating member 70 electrically insulates electrode body 10 and case 20 from each other. Insulating member 70 includes an insulating bracket 71, a peripheral surface insulating portion 72, and a bottom insulating portion 73.

Insulating bracket 71 is disposed between electrode body 10 and lid body 22a. Insulating bracket 71 is relatively rigid and is in contact with both electrode body 10 and lid body 22a. As a result, electrode body 10 is fixed to case 20 in first direction D1.

Peripheral surface insulating portion 72 is disposed between electrode body 10 and peripheral wall 21b. Electrode body 10 is formed of a film-shaped member.

Bottom insulating portion 73 is disposed between electrode body 10 and bottom wall 21a. Bottom insulating portion 73 is formed of a film-shaped member. In the present embodiment, bottom insulating portion 73 is bonded to electrode body 10. In addition, bottom insulating portion 73 covers only a part of the bottom surface of electrode body 10. The detailed configuration of bottom insulating portion 73 will be described together with the configuration of electrode body 10, which will be described below.

As shown in Fig. 2, battery 1 according to the present embodiment includes a plurality of electrode bodies 10. Battery 1 typically includes two electrode bodies 10. These electrode bodies 10 are disposed in a third direction D3. Third direction D3 is a direction orthogonal to both first direction D1 and second direction D2. Peripheral surface insulating portion 72 may integrally cover the plurality of electrode bodies 10 such that these electrode bodies 10 are fixed to each other. In the present embodiment, insulating member 70 includes a plurality of bottom insulating portions 73 such that these bottom insulating portions 73 correspond one-to-one to the plurality of electrode bodies 10.

The following will describe one electrode body 10 of the plurality of electrode bodies 10. Each of the plurality of electrode bodies 10 may have a configuration described below.

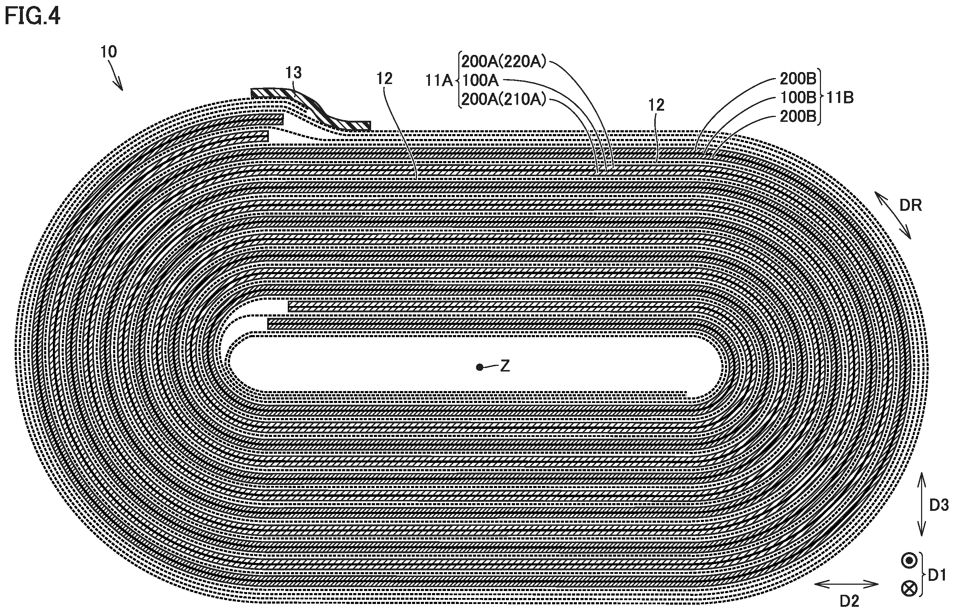

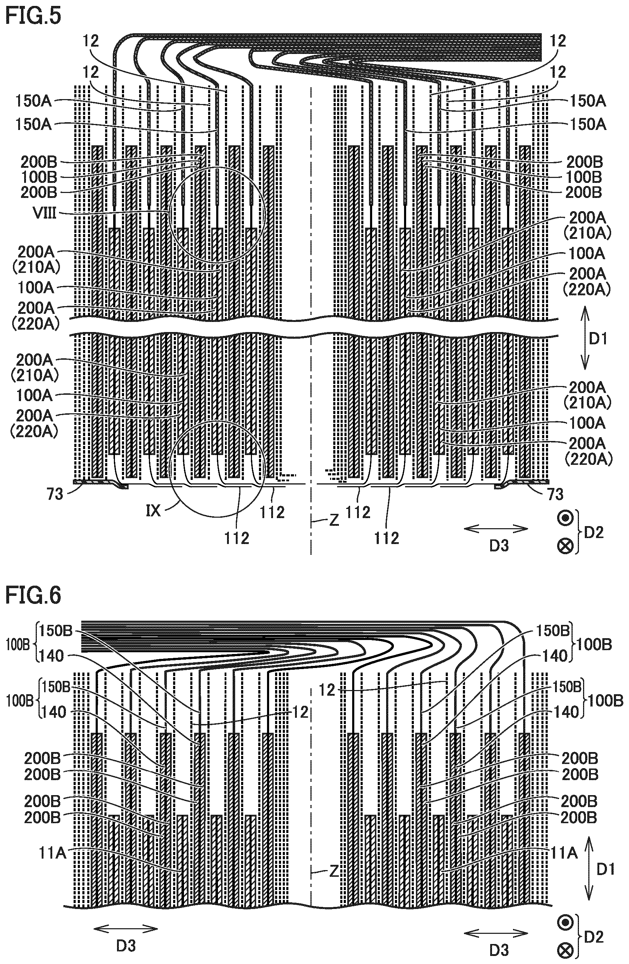

Fig. 4 is a sectional view of the electrode body of Fig. 3 as viewed in the direction of arrow IV-IV. Fig. 5 is a sectional view of the electrode body of Fig. 3 as viewed in the direction of arrow V-V. Fig. 6 is a schematic partial sectional view of the electrode body of Fig. 3 as viewed in the direction of arrow VI-VI. As shown in Figs. 2 to 6, electrode body 10 includes a first electrode 11A, a second electrode 11B, a separator 12, and a tape member 13. Electrode body 10 is wound such that first electrode 11A, second electrode 11B, and separator 12 surround a winding axis Z. In the present embodiment, thus, electrode body 10 is a so-called wound electrode body. However, electrode body 10 may be a stacked electrode body in which first electrode 11A, second electrode 11B, and separator 12 are stacked in one direction (e.g., third direction D3). In Figs. 4 to 6 and 11 below, separator 12 is schematically indicated by the broken line.

First electrode 11A and second electrode 11B have a sheet-like external shape. Electrode body 10 is composed of a group of polar plates in which first electrode 11A and second electrode 11B are wound with one or more separators 12 in between.

In the present embodiment, first electrode 11A is a positive electrode, and second electrode 11B is a negative electrode. However, first electrode 11A may be the negative electrode, and second electrode 11B may be the positive electrode.

Separator 12 is provided between first electrode 11A and second electrode 11B. Separator 12 separates first electrode 11A and second electrode 11B from each other while allowing ions to move between first electrode 11A and second electrode 11B. The ions described above are, for example, lithium ions. Separator 12 is electrically insulating.

Of first electrode 11A, second electrode 11B, and separator 12, separator 12 is located on the innermost side with winding axis Z as the center. In addition, of first electrode 11A, second electrode 11B, and separator 12, separator 12 is located on the outermost side with winding axis Z as the center. The outer edge of separator 12 in a winding direction DR is fixed with tape member 13 disposed on the outer peripheral surface of separator 12.

Separator 12 may include, for example, a polyolefin resin. Separator 12 may be substantially made of the polyolefin resin. The polyolefin resin may include, for example, at least one selected from the group consisting of polyethylene (PE) and polypropylene (PP).

First electrode 11A includes a first current collector 100A, a first active material layer 200A, a first protective portion 300, and a second protective portion 400.

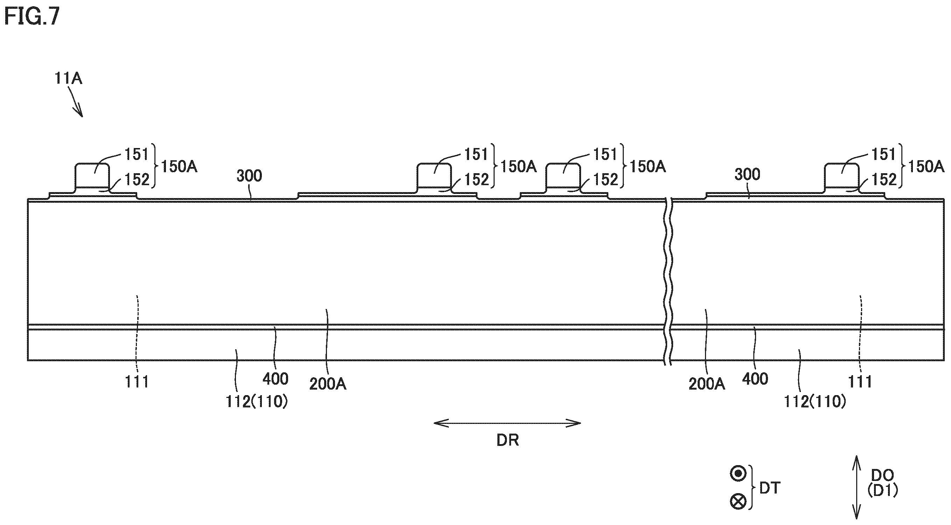

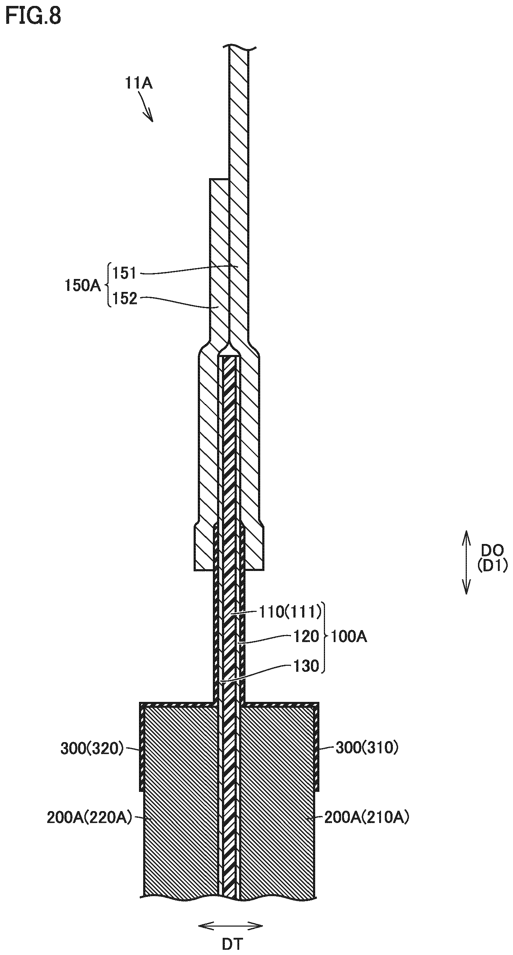

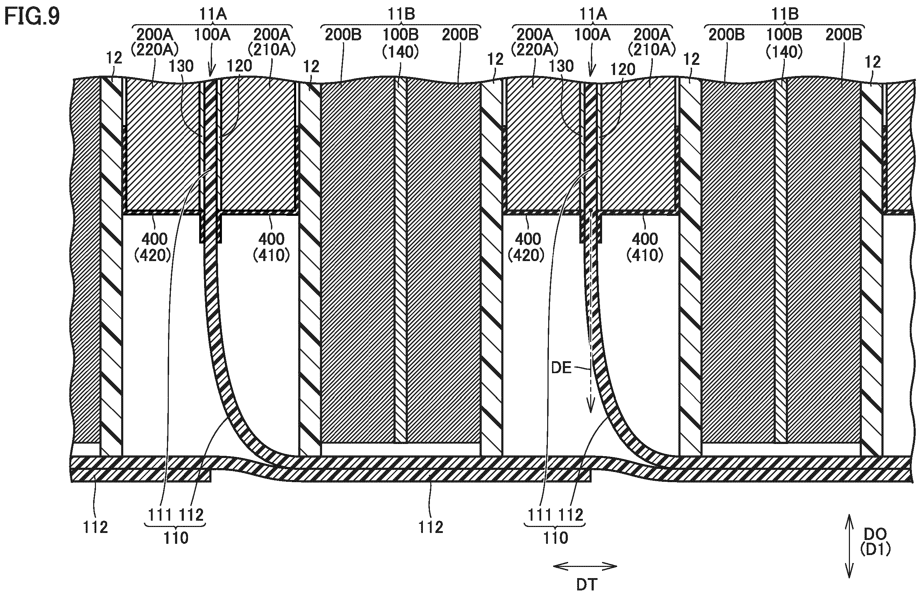

Fig. 7 is a developed view of the first electrode. In other words, Fig. 7 shows the state of first electrode 11A before it is wound. Fig. 8 is an enlarged partial sectional view of a region VIII of the first electrode in Fig. 5. Fig. 9 is an enlarged partial sectional view of a region IX of the electrode body in Fig. 5. As shown in Figs. 5 to 9, first current collector 100A includes a support portion 110, a first conductive layer 120, a second conductive layer 130, and a plurality of first tabs 150A.

Support portion 110 is made of an electrically insulating resin composition. Thus, first current collector 100A is a composite current collector composed of an electrically conductive member and an electrically insulating member. Support portion 110 is made of a material higher in rigidity than separator 12. Support portion 110 is formed of, for example, a resin composition including a polyamide resin, a polyester resin, or a polyolefin resin. For higher rigidity, support portion 110 is preferably made of a resin composition including the polyester resin. More preferably, support portion 110 is substantially made of the polyester resin. The polyester resin may be, for example, polyethylene terephthalate. This can increase the rigidity of first current collector 100A while maintaining the electrical insulation of support portion 110. As a result, support portion 110 can be made relatively thin.

Support portion 110 includes a support layer 111 and an extension portion 112. An orthogonal direction DO, which is orthogonal to a thickness direction DT of support layer 111, is approximately parallel to first direction D1. In other words, support layer 111 extends approximately parallel to first direction D1.

Extension portion 112 extends from support layer 111 in orthogonal direction DO (see Fig. 9). Extension portion 112 extends from support layer 111 along first direction D1. More specifically, extension portion 112 extends downward from the lower side of support layer 111. Extension portion 112 is bent to at least any one side in thickness direction DT. Specifically, extension portion 112 is bent toward winding axis Z. However, extension portion 112 may be bent opposite to the direction toward winding axis Z. Further, extension portion 112 may extend so as to be folded back a plurality of times in both the first and second sides of thickness direction DT. As a result, extension portion 112 may be folded in orthogonal direction DO. Extension portion 112 is formed of a member that is integral with support layer 111.

In addition, extension portion 112 extends over the entire first electrode 11A (first current collector 100A) in winding direction DR of electrode body 10 (see Fig. 7).

The thickness of extension portion 112 may be larger the thickness of support layer 111. This improves the strength of extension portion 112 and suppress damage to extension portion 112 when it is bent. Extension portion 112 may be made of a material higher in rigidity than support layer 111.

The thickness of support portion 110 is, for example, preferably 20 µm or less, more preferably 15 µm or less, and still more preferably 10 µm or less, for a reduced overall thickness of electrode body 10. The thickness of support portion 110 is not particularly limited, as long as it has a desired rigidity. The thickness of support portion 110 is only required to be, for example, 2 µm or more.

First conductive layer 120 is in contact with support layer 111 on a first side in thickness direction DT. In the present embodiment, first conductive layer 120 is located on the winding axis Z side as viewed from support layer 111. Also, first conductive layer 120 is in contact with support layer 111 over the entire surface on the first side in thickness direction DT.

Second conductive layer 130 is in contact with support layer 111 on a second side in thickness direction DT. In the present embodiment, second conductive layer 130 is located on the side opposite to winding axis Z as viewed from support layer 111. Also, second conductive layer 130 is in contact with support layer 111 over the entire surface on the second side in thickness direction DT.

First conductive layer 120 and second conductive layer 130 are each made of a metal. In the present embodiment, first conductive layer 120 and second conductive layer 130 are made of a metal including aluminum. As a result, first current collector 100A can be preferably used as a positive electrode current collector. First current collector 100A may be a negative electrode current collector, and first conductive layer 120 and second conductive layer 130 may be made of a metal including copper.

The thickness of first conductive layer 120 and the thickness of second conductive layer 130 are smaller than the thickness of support portion 110. The thickness of first conductive layer 120 and the thickness of second conductive layer 130 are, for example, 5 µm or less, and more preferably 2 µm or less, and still more preferably 1 µm or less, for a reduced overall thickness of electrode body 10. The thickness of first conductive layer 120 and the thickness of second conductive layer 130 are only required to be, for example, 0.1 µm or more in order to suppress excessive increases in the electrical resistances of first conductive layer 120 and second conductive layer 130.

First conductive layer 120 and second conductive layer 130 are provided by, for example, vapor depositing a metal including aluminum onto support layer 111. Each of first conductive layer 120 and second conductive layer 130 may be a film-shaped member bonded to support layer 111.

Each of the plurality of first tabs 150A is joined to first conductive layer 120 and second conductive layer 130 by, for example, ultrasonic welding. Each of the plurality of first tabs 150A extends from support layer 111 in a direction opposite to an extension direction DE (see Fig. 9) in which extension portion 112 extends from support portion 110.

The plurality of first tabs 150A are disposed so as to be aligned with each other in third direction D3 (see Fig. 5). The plurality of first tabs 150A are joined to each other by, for example, ultrasonic welding. The plurality of first tabs 150A are joined to first coupling member 40A by, for example, ultrasonic welding (see Figs. 2 and 3).

As shown in Fig. 8, each of the plurality of first tabs 150A includes a first foil portion 151 and a second foil portion 152.

First foil portion 151 is located on the side opposite to support portion 110 as viewed from first conductive layer 120. First foil portion 151 is joined to first conductive layer 120. Second foil portion 152 is located on the side opposite to support portion 110 as viewed from second conductive layer 130. Second foil portion 152 is joined to second conductive layer 130. On the side opposite to extension portion 112 as viewed from support layer 111, second foil portion 152 is joined to first foil portion 151. These components are joined to each other by, for example, ultrasonic welding.

In the present embodiment, the length of first foil portion 151 in orthogonal direction DO orthogonal to thickness direction DT is larger than the length of second foil portion 152 in orthogonal direction DO. First foil portion 151 is joined to first coupling member 40A, and second foil portion 152 is not joined to first coupling member 40A. However, the configuration of first tab 150A is not limited thereto. First foil portion 151 or second foil portion 152 can be joined to first coupling member 40A. The length of second foil portion 152 in orthogonal direction DO may be larger than the length of first foil portion 151 in orthogonal direction DO.

First active material layer 200A is stacked on first conductive layer 120. First active material layer 200A is a positive electrode active material layer, but it may be a negative electrode active material layer. In the present embodiment, first active material layer 200A is also stacked on second conductive layer 130. First active material layer 200A includes a first inner active material layer 210A and a first outer active material layer 220A. First inner active material layer 210A is stacked on first conductive layer 120. First outer active material layer 220A is stacked on second conductive layer 130.

The upper edge of first active material layer 200A is separated from each of the plurality of first tabs 150A. The upper edge of first inner active material layer 210A is separated from first foil portion 151 of each of the plurality of first tabs 150A. The upper edge of first outer active material layer 220A is separated from second foil portion 152 of each of the plurality of first tabs 150A.

As shown in Fig. 9, the lower edge of first active material layer 200A is aligned with the lower edge of support layer 111. In other words, the lower edge of first active material layer 200A is aligned with the portion of extension portion 112 which extends from support layer 111.

Separator 12 is stacked on first active material layer 200A in the radial direction centered around winding axis Z. Separator 12 is stacked on first inner active material layer 210A in the radial direction described above. Separator 12 is also stacked on first outer active material layer 220A in the radial direction described above.

First protective portion 300 is electrically insulating and is made of, for example, ceramic. First protective portion 300 covers the upper portion of first active material layer 200A. First protective portion 300 further covers first current collector 100A between first tab 150A and first active material layer 200A.

First protective portion 300 includes a first inner protective portion 310 and a first outer protective portion 320. First inner protective portion 310 covers the upper portion of first inner active material layer 210A. First inner protective portion 310 covers first conductive layer 120 between first foil portion 151 and first inner active material layer 210A. First outer protective portion 320 covers the upper portion of first outer active material layer 220A. First outer protective portion 320 covers second conductive layer 130 between first outer active material layer 220A and first outer protective portion 320.

Second protective portion 400 is electrically insulating and is made of, for example, ceramic. Second protective portion 400 covers the lower portion of first active material layer 200A. Second protective portion 400 also covers a part of extension portion 112.

Second protective portion 400 includes a second inner protective portion 410 and a second outer protective portion 420. Second inner protective portion 410 covers the lower portion of first inner active material layer 210A. Second inner protective portion 410 further covers a part of the inner peripheral surface of extension portion 112 in the radial direction described above. Second outer protective portion 420 covers the lower portion of first outer active material layer 220A. Second outer protective portion 420 further covers a part of the outer peripheral surface of extension portion 112 in the radial direction described above. First electrode 11A may not include second protective portion 400.

As shown in Figs. 4 to 6 and 9, second electrode 11B is stacked over first active material layer 200A with separator 12 in between in the radial direction described above. More specifically, second electrode 11B is stacked over first inner active material layer 210A with separator 12 in between, and is also stacked over first outer active material layer 220A with separator 12 in between.

Second electrode 11B includes a second current collector 100B and a second active material layer 200B. Second current collector 100B includes a conductive support portion 140 and a plurality of second tabs 150B (see Fig. 6). Conductive support portion 140 extends along orthogonal direction DO (first direction D1). The plurality of second tabs 150B extend from the upper end of conductive support portion 140. The plurality of second tabs 150B are joined to each other by ultrasonic welding and are also joined to second coupling member 40B (see Figs. 2 and 3).

The plurality of second tabs 150B and conductive support portion 140 are formed of an integral member, for example, formed of a metal foil. In the present embodiment, the plurality of second tabs 150B and conductive support portion 140 are made of, for example, a metal including copper. As a result, second current collector 100B may be preferably used as a negative electrode current collector. When first current collector 100A is a negative electrode current collector, the plurality of second tabs 150B and conductive support portion 140 may be made of a metal including aluminum.

Second active material layer 200B is stacked on both surfaces of conductive support portion 140 of second current collector 100B. In the present embodiment, second electrode 11B is a negative electrode. Thus, second active material layer 200B is a negative electrode active material layer. Also, as shown in Fig. 9, the edge of second active material layer 200B in extension direction DE is located ahead of the edge of first active material layer 200A. Thus, the edge of second electrode 11B in extension direction DE is located ahead of the edges of first conductive layer 120, second conductive layer 130, and first active material layer 200A. Second active material layer 200B may be a positive electrode active material layer.

Herein, extension portion 112 of support portion 110 in first current collector 100A of first electrode 11A will be described further.

Extension portion 112 extends beyond second electrode 11B in extension direction DE in which extension portion 112 extends from support layer 111. Further, extension portion 112 extends beyond separator 12 in extension direction DE.

In addition, extension portion 112 is bent to at least any one side in thickness direction DT, and is thus aligned with separator 12 in extension direction DE in which extension portion 112 extends from support layer 111. More specifically, extension portion 112 is aligned with second electrode 11B in extension direction DE.

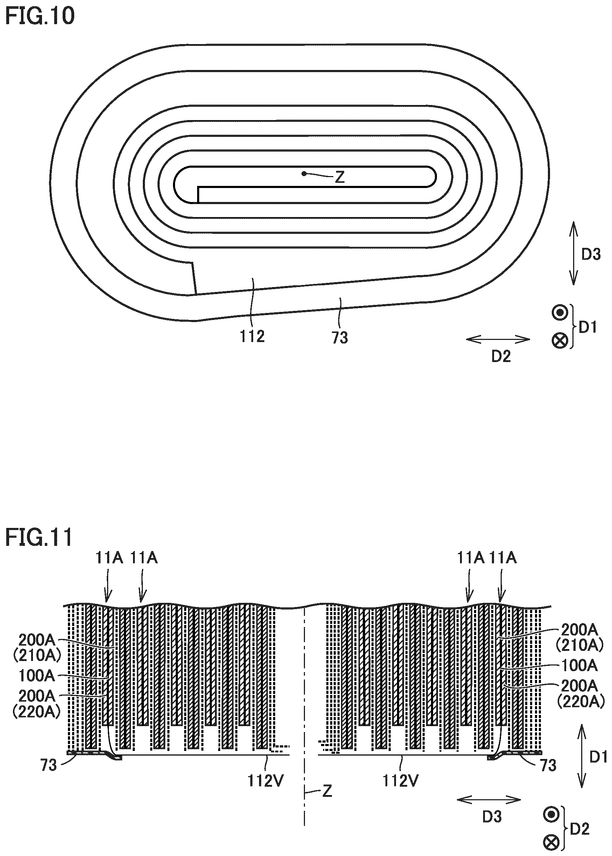

Fig. 10 is a view of the electrode body and the bottom insulating portion as viewed from the extension direction side. As shown in Fig. 10, the portions of extension portion 112 which are adjacent to each other in the radial direction centered around winding axis Z overlap each other.

Also, as shown in Figs. 5 and 10, bottom insulating portion 73 is disposed on the outer peripheral side of extension portion 112 in the radial direction centered around winding axis Z, as viewed from extension direction DE of extension portion 112. Bottom insulating portion 73 is disposed so as to be aligned with first electrode 11A and second electrode 11B of electrode body 10, which are located on the outermost side.

As described above, first current collector 100A according to Embodiment 1 of the present disclosure includes support portion 110, first conductive layer 120, and second conductive layer 130. Support portion 110 includes an electrically insulating resin composition. Support portion 110 includes support layer 111 and extension portion 112. First conductive layer 120 is in contact with support layer 111 on a first side in thickness direction DT of support layer 111. Second conductive layer 130 is in contact with support layer 111 on a second side in thickness direction DT. Extension portion 112 extends from support layer 111 in orthogonal direction DO orthogonal to thickness direction DT.

With the configuration described above, as extension portion 112 faces an electrically conductive member (e.g., bottom body 21aa of case 20) located on the side on which extension portion 112 extends as viewed from first current collector 100A, first conductive layer 120 and second conductive layer 130 can be easily electrically insulated from the electrically conductive member. As a result, on the side on which extension portion 112 extends, an insulating member (e.g., bottom insulating portion 73) disposed between the electrically conductive member described above and extension portion 112 can be simplified, or the insulating member can be made unnecessary in battery 1. As a result, the volume ratio of electrode body 10 including first current collector 100A in battery 1 can be relatively increased. Thus, the energy density of battery 1 can be improved.

In the present embodiment, extension portion 112 is bent to at least any one side in thickness direction DT.

With the configuration described above, first conductive layer 120 or second conductive layer 130 can be electrically insulated from the electrically conductive member described above more reliably on the side on which extension portion 112 extends.

Battery 1 according to Embodiment 1 of the present disclosure includes electrode body 10 and case 20. Case 20 is electrically conductive. Case 20 houses electrode body 10. Electrode body 10 includes first electrode 11A, second electrode 11B, and separator 12. First electrode 11A includes first current collector 100A and first active material layer 200A. First current collector 100A includes support portion 110, first conductive layer 120, and second conductive layer 130. Support portion 110 is made of an electrically insulating resin composition. Support portion 110 includes support layer 111 and extension portion 112. First conductive layer 120 is in contact with support layer 111 on the first side in thickness direction DT of support layer 111. Second conductive layer 130 is in contact with support layer 111 on the second side in thickness direction DT. First active material layer 200A is stacked on first conductive layer 120. Separator 12 is stacked on first active material layer 200A. Second electrode 11B is stacked over first active material layer 200A with separator 12 in between. Extension portion 112 extends from support layer 111 in orthogonal direction DO orthogonal to thickness direction DT.

With the configuration described above, as extension portion 112 faces case 20 (e.g., bottom body 21aa) located on the side on which extension portion 112 extends as viewed from first current collector 100A, first conductive layer 120 and second conductive layer 130 can be easily electrically insulated from the electrically conductive member. As a result, on the side on which extension portion 112 extends, the insulating member (e.g., bottom insulating portion 73) disposed between case 20 and extension portion 112 can be simplified, or the insulating member can be made unnecessary in battery 1. As a result, the volume ratio of electrode body 10 including first current collector 100A in battery 1 can be relatively increased. Thus, the energy density of battery 1 can be improved.

In the present embodiment, extension portion 112 extends beyond second electrode 11B in extension direction DE in which extension portion 112 extends from support layer 111.

With the configuration described above, as extension portion 112 comes into contact with case 20 on the extension direction DE side, second electrode 11B can be easily electrically insulated from case 20.

In the present embodiment, extension portion 112 extends beyond separator 12 in extension direction DE.

With the configuration described above, extension portion 112 can reliably come into contact with case 20 on the extension direction DE side. As a result, electrode body 10 can be electrically insulated from case 20 more easily.

In the present embodiment, extension portion 112 is aligned with separator 12 in extension direction DE in which extension portion 112 extends from support layer 111.

With the configuration described above, extension portion 112 can reliably come into contact with case 20 on the extension direction DE side. As a result, electrode body 10 can be electrically insulated from case 20 more easily.

In the present embodiment, extension portion 112 is aligned with second electrode 11B in extension direction DE.

With the configuration described above, second electrode 11B can be electrically insulated from case 20 more reliably.

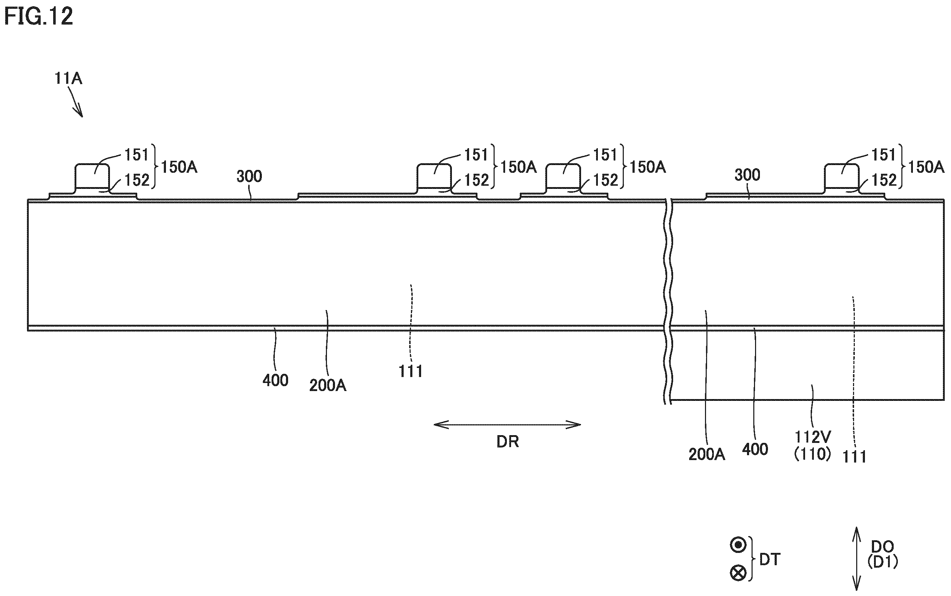

Extension portion 112 does not need to extend over the entire first electrode 11A (first current collector 100A) in winding direction DR of electrode body 10. Fig. 11 is a partial sectional view of a battery according to a modification. Fig. 12 is a developed view of the first electrode in the modification. As shown in Figs. 11 and 12, an extension portion 112V may be provided only in a region of a part of first electrode 11A in winding direction DR. The region may include the end of the winding in winding direction DR or may include the beginning of the winding. In other words, the region may include a portion of first electrode 11A which is located on the outermost side or may include a portion thereof which is located on the innermost side, centered around winding axis Z.

### (Embodiment 2)

Next, a current collector and a battery according to Embodiment 2 of the present disclosure will be described. The current collector and the battery according to Embodiment 2 differ from those of Embodiment 1 in the configuration of the support portion. The same components and advantageous effects as those of Embodiment 1 will not be repeated.

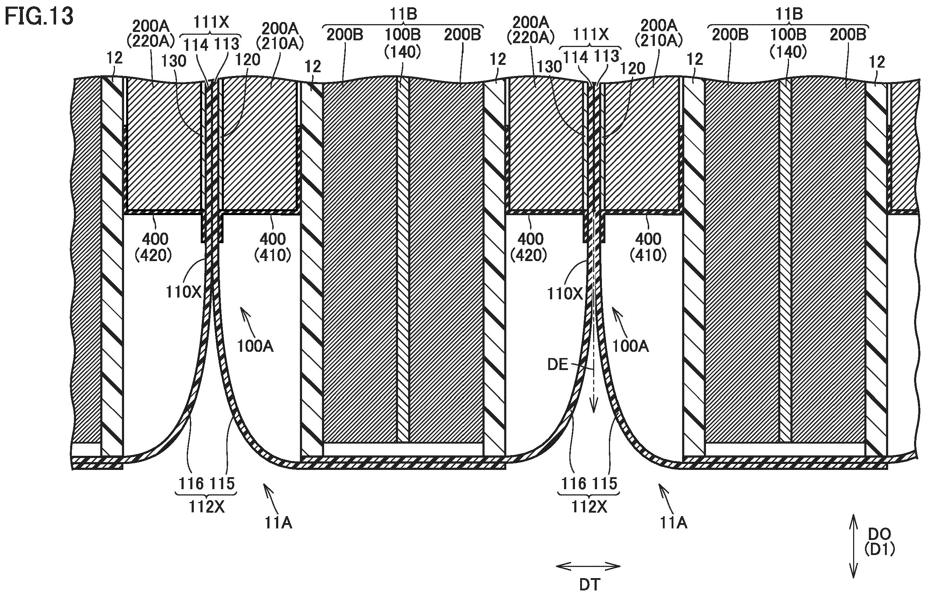

Fig. 13 is a partial sectional view of an electrode body of the battery according to Embodiment 2. The cross-section shown in Fig. 13 corresponds to the cross-section of Embodiment 1 shown in Fig. 9.

As shown in Fig. 13, in a support portion 110X according to the present embodiment, a support layer 111X includes a first support layer 113 and a second support layer 114. First support layer 113 and second support layer 114 are stacked on each other in thickness direction DT. First support layer 113 and second support layer 114 are formed separately from each other. First support layer 113 and second support layer 114 may be formed of the same material or may be formed of different materials.

Extension portion 112X includes a first extension portion 115 and a second extension portion 116. First extension portion 115 and second extension portion 116 are aligned with each other in thickness direction DT. First extension portion 115 is bent to the side opposite to second extension portion 116. Second extension portion 116 is bent to the side opposite to first extension portion 115.

With the configuration described above, both first conductive layer 120 and second conductive layer 130 can be more reliably insulated from an electrically conductive member (e.g., bottom body 21aa of case 20) located on the side on which extension portion 112X extends.

First extension portion 115 extends from first support layer 113. Second extension portion 116 extends from second support layer 114. First extension portion 115 and second extension portion 116 extend beyond second electrode 11B in extension direction DE in which first extension portion 115 and second extension portion 116 extend from first support layer 113 and second support layer 114, respectively. Further, first extension portion 115 and second extension portion 116 extend beyond separator 12 in extension direction DE.

In addition, first extension portion 115 and second extension portion 116 are bent in opposite directions in thickness direction DT. As a result, first extension portion 115 and second extension portion 116 are aligned with separators 12 in extension direction DE, which are located on both sides in the radial direction described above. More specifically, first extension portion 115 and second extension portion 116 are aligned with second electrodes 11B, which are located on both sides in the radial direction described above, in extension direction DE.

### (Embodiment 3)

Next, a current collector and a battery according to Embodiment 3 of the present disclosure will be described. The current collector and the battery according to Embodiment 3 differ from those of Embodiment 1 in the configuration of the support portion. The same components and advantageous effects as those of Embodiment 1 will not be repeated.

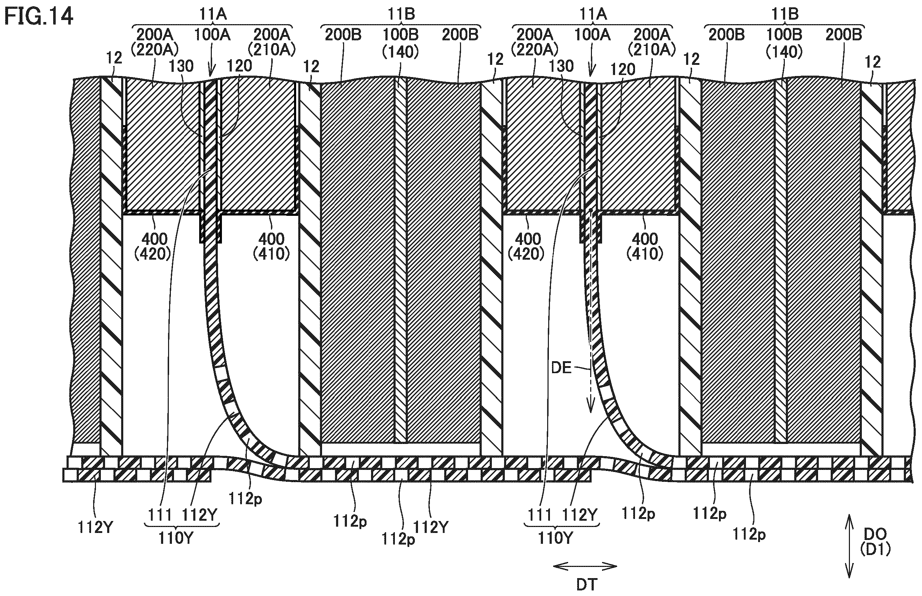

Fig. 14 is a partial sectional view of an electrode body of the battery according to Embodiment 3. The cross-section shown in Fig. 14 corresponds to the cross-section of Embodiment 1 shown in Fig. 9.

As shown in Fig. 14, in a support portion 110Y according to the present embodiment, an extension portion 112Y has pores 112p.

With the configuration described above, the liquid such as the electrolyte, gas, or the like that fills, for example, case 20 or the like can easily spread throughout the inside of case 20 by passing through pores 112p.

As described above, specifically, pores 112p provide liquid permeability or gas permeability to extension portion 112Y in the thickness direction of extension portion 112Y. Pores 112p are positioned so as to be aligned with first electrode 11A in extension direction DE. Pores 112p are positioned so as to be aligned with second electrode 11B in extension direction DE. Pores 112p are located at positions at which extension portions 112Y overlap each other in extension direction DE (first direction D1).

The configurations that can be combined may be combined with each other in the description of the embodiments described above.

Although the embodiments of the present disclosure have been described, it should be understood that the present embodiments disclosed herein are illustrative and non-restrictive in every respect. The scope of the present disclosure is defined by the terms of the claims and is intended to include any modifications within the scope and meaning equivalent to the terms of the claims.

## Claims

1. A current collector comprising:
a support portion (110);
a first conductive layer (120); and
a second conductive layer (130), wherein
the support portion (110) includes an electrically insulating resin composition,
the support portion (110) includes a support layer (111) and an extension portion (112),
the first conductive layer (120) is in contact with the support layer (111) on a first side in a thickness direction (DT) of the support layer (111),
the second conductive layer (130) is in contact with the support layer (111) on a second side in the thickness direction (DT), and
the extension portion (112) extends from the support layer (111) in an orthogonal direction (DO) orthogonal to the thickness direction (DT).

2. The current collector according to claim 1, wherein the extension portion (112) is bent to at least any one side in the thickness direction (DT).

3. The current collector according to claim 1, wherein
the extension portion (112X) includes a first extension portion (115) and a second extension portion (116),
the first extension portion (115) and the second extension portion (116) are aligned with each other in the thickness direction (DT),
the first extension portion (115) is bent to a side opposite to the second extension portion (116), and
the second extension portion (116) is bent to a side opposite to the first extension portion (115).

4. The current collector according to any one of claims 1 to 3, wherein the extension portion (112Y) has a pore (112p).

5. A battery comprising:
an electrode body (10); and
a case (20), wherein
the case (20) is electrically conductive,
the case (20) houses the electrode body (10),
the electrode body (10) includes a first electrode (11A), a second electrode (11B), and a separator (12),
the first electrode (11A) includes a current collector (100A) and an active material layer (200A),
the current collector (100A) includes a support portion (110), a first conductive layer (120), and a second conductive layer (130),
the support portion (110) includes an electrically insulating resin composition,
the support portion (110) includes a support layer (111) and an extension portion (112),
the first conductive layer (120) is in contact with the support layer (111) on a first side in a thickness direction (DT) of the support layer (111),
the second conductive layer (130) is in contact with the support layer (111) on a second side in the thickness direction (DT),
the active material layer (200A) is stacked on the first conductive layer (120),
the separator (12) is stacked on the active material layer (200A),
the second electrode (11B) is stacked over the active material layer (200A) with the separator (12) in between, and
the extension portion (112) extends from the support layer (111) in an orthogonal direction (DO) orthogonal to the thickness direction (DT).

6. The battery according to claim 5, wherein the extension portion (112) extends beyond the second electrode (11B) in an extension direction (DE) in which the extension portion (112) extends from the support layer (111).

7. The battery according to claim 6, wherein the extension portion (112) extends beyond the separator (12) in the extension direction (DE).

8. The battery according to claim 5, wherein the extension portion (112) is bent to at least any one side in the thickness direction (DT).

9. The battery according to claim 8, wherein the extension portion (112) is aligned with the separator (12) in an extension direction (DE) in which the extension portion (112) extends from the support layer (111).

10. The battery according to claim 9, wherein the extension portion (112) is aligned with the second electrode (11B) in the extension direction (DE).

11. The battery according to any one of claims 5 to 10, wherein
the extension portion (112X) includes a first extension portion (115) and a second extension portion (116),
the first extension portion (115) and the second extension portion (116) are aligned with each other in the thickness direction (DT),
the first extension portion (115) is bent to a side opposite to the second extension portion (116), and
the second extension portion (116) is bent to a side opposite to the first extension portion (115).

12. The battery according to any one of claims 5 to 10, wherein the extension portion (112Y) has a pore (112p).
